# EUROPÄISCHE PATENTSCHRIFT

(11) **EP 2 655 513 B1**
(45) Veröffentlichungstag und Bekanntmachung des Hinweises auf die Patenterteilung: **04.05.2016**
(21) Anmeldenummer: 11797327.1
(22) Anmeldetag: 19.12.2011
(51) Int. Cl.: C08L 67/02, C08L 69/00

(54) **ANTISTATISCHE POLYCARBONAT-FORMMASSEN**
ANTISTATIC POLYCARBONATE MOLDING COMPOUNDS
MATIÈRES MOULABLES ANTISTATIQUES À BASE DE POLYCARBONATE

(30) Priorität: 23.12.2010 EP 10196931
(43) Veröffentlichungstag der Anmeldung: 30.10.2013
(73) Patentinhaber: Covestro Deutschland AG, 51373 Leverkusen (DE)
(72) Erfinder: FELDERMANN, Achim, 40597 Düsseldorf (DE); SEIDEL, Andreas, 41542 Dormagen (DE)
(74) Vertreter: Levpat
(86) Internationale Anmeldenummer: PCT/EP2011/073274
(87) Internationale Veröffentlichungsnummer: WO 2012/084848

(56) Entgegenhaltungen:
- EP-A1- 0 023 291
- EP-A1- 2 256 165
- WO-A1-2004/060997
- JP-A- 9 137 053
- DATABASE WPI Week 197838 Thomson Scientific, London, GB; AN 1978-67934A XP002636609, & JP 53 094364 A (TORAY IND INC) 18. August 1978 (1978-08-18)

## Beschreibung

Die vorliegende Erfindung betrifft dauerhaft antistatisch ausgerüstete Polycarbonat-, Polyester- und Polyestercarbonat-Zusammensetzungen, mit einer gegenüber dem Stand der Technik verbesserten Wärmeformbeständigkeit, Tieftemperaturzähigkeit, Verarbeitungsstabilität, Spannungsrißbeständigkeit und insbesondere Hydrolysebeständigkeit. Darüber hinaus betrifft die vorliegende Erfindung Verfahren zur Herstellung dieser Zusammensetzungen sowie deren Verwendung.

Bei Kunststofformkörpern ist die Anlagerung von Staub unter Ausbildung von Staubfiguren ein weit verbreitetes Problem. Siehe hierzu z.B. Saechtling, Kunststoff-Taschenbuch, 26. Ausgabe, Hanser Verlag, 1995, München, S. 140 f. Besonders störend und die Funktion einschränkend sind Staubablagerungen bei hochglänzenden Formkörpern. Insbesondere stören diese Staubanlagerungen, wenn noch eine Lackierung der Formkörper erfolgen soll, so daß der Staub das optische Ergebnis negativ beeinflussen kann.

Eine bekannte Methode die Staubanlagerung auf Kunststoffkörpern zu vermindern ist der Einsatz von Antistatika. In der Literatur sind für Thermoplasten Antistatika beschrieben (siehe z.B. Gächter, Müller, Plastic Additives, Hanser Verlag, München, 1996, S. 749 ff), welche die Staubanlagerung einschränken. Diese Antistatika reduzieren den elektrischen Oberflächenwiderstand der Kunststoffformmassen, wodurch Oberflächenladungen, welche sich bei der Herstellung und beim Gebrauch durch Reibung ausbilden, besser abgeleitet werden. Somit werden Staubpartikel weniger elektrostatisch angezogen und folglich gibt es eine geringere Staubanlagerung.

Bei den Antistatika unterscheidet man im allgemeinen zwischen internen und externen Antistatika. Ein externes Antistatikum wird nach der Verarbeitung auf den Kunststoffformkörper aufgetragen, ein internes Antistatikum wird als Additiv den Kunststoffformmassen zugesetzt. Aus wirtschaftlichen Gründen ist die Verwendung von internen Antistatika meist wünschenswert, da keine weiteren kostenintensiven Arbeitsschritte zur Auftragung des Antistatikums nach der Verarbeitung nötig sind.

Eine häufig beschriebene Stoffklasse von internen Antistatika in Thermoplasten sind die Salze langkettiger Sulfonsäuren. Diese Verbindungen, wie auch die ebenfalls als Antistatikum zum Einsatz kommenden langkettigen quaternären Phosphonium- oder Ammoniumsalze, führen jedoch in Polycarbonat- und Polyesterzusammensetzungen unter der thermischen Belastung bei deren Herstellung und Verarbeitung zu Molekulargewichtsabbau des Polymers und damit zur Beeinträchtigung der anwendungstechnischen Eigenschaften (Wärmeformbeständigkeit, Spannungsrißbeständigkeit, Reißdehnung, Zähigkeit, etc.). Derartige niedermolekulare anionische beziehungsweise kationische oberflächenaktive Antistatika wirken wie auch andere niedermolekulare nicht-ionische Antistatika wie beispielsweise Fettsäureester, ethoxylierte Alkylamine, ethoxylierte Alkohole oder Diethanolamide, über ihre Migration an die Oberfläche des Kunststoffes und dortige Anziehung von Wasser aus der Luft, wodurch letztendlich die Oberflächenleitfähigkeit des Kunststoffes angehoben wird. Ein weiterer Nachteil dieser Verbindungen besteht insofern darin, dass diese Antistatika ihre Wirkung nicht unter Bedingungen mit niedriger Luftfeuchtigkeit ausreichend entfalten, die antistatische Wirkung nicht sofort nach der Herstellung der Bauteile einsetzt und vor allen Dingen nicht permanenter Natur ist. Insbesondere können diese oberflächenaktiven Antistatika beispielsweise durch Reinigung der Oberflächen partiell oder vollständig wieder von der Bauteiloberfläche entfernt werden, was die antistatische Wirkung letztendlich auf Dauer herabsetzt.

Polyetheramide, Polyesteramide oder Polyetheresteramide sind ebenfalls bekannt als Antistatika, wobei diese Verbindungen Polymerzusammensetzungen mit einer dauerhaften Antistatikwirkung auszustatten vermögen. Ihre Wirkung beruht auf der Ausbildung eines dreidimensionalen Netzwerkes des Antistatikums in dem mit dem Antistatikum nicht mischbaren Polymer, welches antistatisch ausgerüstet werden soll. Aufgrund der vergleichsweise hohen elektrischen Leitfähigkeit der Polyetheramide, Polyesteramide und Polyetheresteramide resultiert somit eine sofortige und dauerhafte Reduzierung des elektrischen Oberflächen- und Volumenwiderstandes des antistatisch auszurüstenden Polymers, welche bereits bei sehr geringen Luftfeuchtigkeiten einsetzt und von dieser weit weniger abhängt, als das bei den zuvor genannten oberflächenaktiven Verbindungen der Fall ist.

Die EP 613919, US 6,784,257, US 6,706,851 und US 6,913,804 offenbaren mit Polyetheramiden, Polyesteramiden oder Polyetheresteramiden antistatisch ausgerüstete Polymerzusammensetzungen. Der Zusatz von Säuren ist in diesen Anmeldungen nicht beschrieben. Die WO 2004/060997 A1 offenbart eine antistatische Zusammensetzung enthaltend Polycarbonat, Kautschuk-haltigen Schlagzähmodifikator, Polyester- oder Polyetheramid sowie gegebenenfalls saure Phosphorverbindungen als Stabilisatoren.

Nachteil der Vewendung von Polyetheramiden, Polyesteramiden und Polyetheresteramiden als Antistatika in Polcarbonat- oder Polyesterzusammensetzungen ist es, dass ihr Einsatz unter der thermischen Belastung bei der Herstellung und Verarbeitung solcher Zusammensetzungen zu Molekulargewichtsabbau des Polycarbonats oder Polyesters und damit zur Beeinträchtigung der anwendungstechnischen Eigenschaften (Wärmeformbeständigkeit, Spannungsrißbeständigkeit, Zähigkeit, Verarbeitungstabilität und Hydrolysebeständigkeit etc.) der Zusammensetzungen führt.

Aus JP 09137053 A sind mit Polyetheramiden, Polyesteramiden und/oder Polyetheresteramiden antistatisch ausgerüstete Polycarbonatzusammensetzungen bekannt, deren antistatische Eigenschaften durch Zusatz von 0,01 bis 10 Gew-% eines anorganischen oder organischen Elektrolyten verstärkt werden. Als Elektrolyte werden anorganische sowie organische Salze und Dodecylbenzolsulfonsäure, p-Toluolsulfonsäure, Dodecylphenyletherdisulfonsäure, Naphthalinsulfonsäure und deren Kondensate mit Formalin, Arylsulfonsäuren, Alkylsulfonsäuren, Stearinsäure, Laurylsäure und Polyacrylsäuren sowie organische Phosphorsäuren genannt. Grundsätzlich führt die Lehre der JP 09137053 A aber von der Verwendung von Säuren weg, da die mit diesen erzielten Ergebnisse schlechter als die mit den entsprechenden Salzen erzielten Ergebnisse seien.

Die Aufgabe der vorliegenden Erfindung war es demnach, Polycarbonat-Zusammensetzungen mit dauerhaft antistatischen Eigenschaften bereitzustellen, die sich gegenüber dem Stand der Technik durch eine verbesserte Wärmeformbeständigkeit, Tieftemperaturzähigkeit, Verarbeitungsstabilität, Spannungsrißbeständigkeit und insbesondere Hydrolysebeständigkeit auszeichnen.

Überraschend wurde gefunden, dass Zusammensetzungen enthaltend
A) 40 bis 80 Gew.-Teile, bezogen auf die Summe der Komponenten A und B mindestens eine Verbindung ausgewählt aus der Gruppe bestehend aus Polycarbonaten, Polyestern und Polyestercarbonaten ,
B) 20 bis 60 Gew.-Teile bezogen auf die Summe der Komponenten A und B eines Gemisches aus Ba) einem ersten kautschukmodifizierten Vinyl(co)polymerisat, Bb) einem zweiten kautschukmodifizierten Vinyl(co)polymerisat, und Bc) optional mindestens einem kautschukfreien Vinyl(co)polymerisat, wobei es sich bei dem ersten kautschukmodifizierten Vinyl(co)polymerisat Ba) um mindestens ein Pfropfpolymer hergestellt in Emulsionspolymerisation und bei dem zweiten kautschukmodifizierten Vinyl(co)polymerisat Bb) um mindestens ein Pfropfpolymer hergestellt in Massepolymerisation handelt.
C) mindestens eine Verbindung ausgewählt aus der Gruppe bestehend aus Polyetheramiden, Polyesteramiden und Polyetheresteramiden,
D) mindestens eine Bröstedt-saure Verbindung ausgewählt aus der Gruppe bestehend aus organischen Fruchtsäuren, anorganischen sauren Phosphorverbindungen und Verbindungen der Formel IV (s.u.), wobei als Fruchtsäure bevorzugt Citronensäure zum Einsatz kommt, die anorganischen sauren Phosphorverbindungen bevorzugt ausgewählt sind aus der Gruppe bestehend aus Phosphorsäure und deren saure Salze, Oligo-/Polyphosphorsäure und deren saure Salze, phosphorige Säure und deren saure Salze, Oligo-/Polyphosphorige Säure und deren saure Salze, und als Verbindung der Formel IV bevorzugt der Phosphorigsäureester des Bis-(2-hydroxy-3-cyclohexyl-5-methyl-phenyl)-methans gemäß Formel IVb (s.u.) zum Einsatz kommt,
E) optional weitere Additive, diese Aufgabe erfüllen.

Bevorzugt enthalten die Zusammensetzungen
A) 50 bis 70 Gew.-Teile, bezogen auf die Summe der Komponenten A und B, an Polycarbonat, Polyester, Polyestercarbonat oder eine Mischung daraus,
B) 30 bis 50 Gew.-Teile, bezogen auf die Summe der Komponenten A und B, der kautschukmodifizierten Vinyl(co)polymerisate,
C) 0,5 bis 20 Gew.-%, bevorzugt 1 bis 10 Gew.-%, weiter bevorzugt 2 bis 8 Gew.-%, besonders bevorzugt 2 bis 5 Gew.-%, bezogen auf die Gesamtzusammensetzung, eines Polyetheramids, Polyesteramids, Polyetheresteramids oder einer Mischung daraus,
D) 0,001 bis 3 Gew.-%, bevorzugt 0,01 bis 1 Gew.-%, besonders bevorzugt 0,05 bis 0,5 Gew.-%, bezogen auf die Gesamtzusammensetzung, mindestens einer Bröstedt-sauren Verbindung ausgewählt aus der Gruppe bestehend aus organischen Fruchtsäuren, anorganischen sauren Phosphorverbindungen und Verbindungen der Formel IV (s.u.), wobei als Fruchtsäure bevorzugt Citronensäure zum Einsatz kommt, die anorganischen sauren Phosphorverbindungen bevorzugt ausgewählt sind aus der Gruppe bestehend aus Phosphorsäure und deren saure Salze, Oligo-/Polyphosphorsäure und deren saure Salze, phosphorige Säure und deren saure Salze, Oligo-/Polyphosphorige Säure und deren saure Salze, und als Verbindung der Formel IV bevorzugt der Phosphorigsäureester des Bis-(2-hydroxy-3-cyclohexyl-5-methylphenyl)-methans gemäß Formel IVb (s.u.) zum Einsatz kommt" und
E) 0 bis 30 Gew.-%, bevorzugt 0,1 bis 20 Gew.-%, weiter bevorzugt 0,2 bis 10 Gew.-%, noch weiter bevorzugt 0,3 bis 5 Gew.-%, und besonders bevorzugt 0,6 bis 1,2 Gew.-%, bezogen auf die Gesamtzusammensetzung, eines oder mehrerer Polymeradditive.

Folgende Zusammensetzungen sind noch weiter bevorzugt :
Zusammensetzungen, in denen die Komponenten A, B, C und E in den oben genannten Anteilen enthalten sind und
   D) enthalten ist in einem Anteil von 0,01 bis 3 Gew.-%, weiter bevorzugt von 0,05 bis 1 Gew.-%, besonders bevorzugt von 0,1 bis 0,5 Gew.-%, bezogen auf die Gesamtzusammensetzung, und D eine Fruchtsäure ist.
Zusammensetzungen, in denen die Komponenten A, B, C und E in den oben genannten Anteilen enthalten sind und
   D) enthalten ist in einem Anteil von 0,01 bis 1 Gew.-%, weiter bevorzugt von 0,05 bis 0,3 Gew.-%, besonders bevorzugt von 0,1 bis 0,2 Gew.-%, bezogen auf die Gesamtzusammensetzung, und D eine Verbindung der Formel IV (s.u.) ist.
Zusammensetzungen, in denen die Komponenten A, B, C und E in den oben genannten Anteilen enthalten sind und
   D) enthalten ist in einem Anteil von 0,1 bis 3 Gew.-%, weiter bevorzugt von 0,3 bis 2 Gew.-%, besonders bevorzugt von 0,5 bis 1 Gew.-%, bezogen auf die Gesamtzusammensetzung, und D ein saures Salz einer Säure ausgewählt aus der Gruppe bestehend aus Phosphorsäure, Oligo-/Polyphosphorsäure, phosphorige Säure und Oligo-/Polyphosphorige Säure ist.
Zusammensetzungen, in denen die Komponenten A, B, C und E in den oben genannten Anteilen enthalten sind und
   D) enthalten ist in einem Anteil von 0,001 bis 0,3 Gew.-%, weiter bevorzugt von 0,005 bis 0,15 Gew.-%, besonders bevorzugt von 0,01 bis 0,05 Gew.-%, bezogen auf die Gesamtzusammensetzung, und D eine Säure ausgewählt aus der Gruppe bestehend aus Phosphorsäure, Oligo-/Polyphosphorsäure, phosphorige Säure und, Oligo-/Polyphosphorige Säure ist,

Die Summe der Gew.-% der Komponenten A und B in der Gesamtzusammensetzung berechnet sich aus der Differenz von 100 Gew.% minus der Summe der Gew.% der Komponenten C, D und E, und
wobei unter Gesamtzusammensetzung die Summe der Gew.% aller Komponenten A + B+ C + D + E = 100 Gew.% zu verstehen ist.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 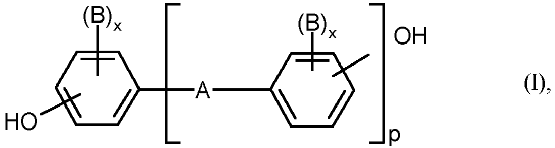 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III)

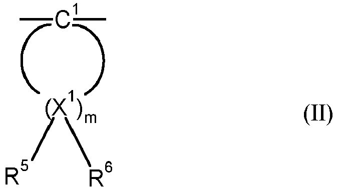

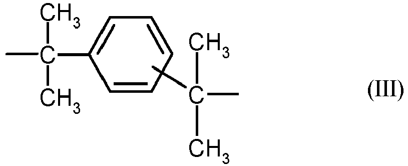

- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(l,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 3 3 4 7 8 2 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.
Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Erfindungsgemäß einsetzbare thermoplastische Polyester gemäß Komponente A sind bevorzugt Polyalkylenterephthalate, die sich nach literaturbekannten Methoden herstellen lassen (s. z.B. Kunststoff-Handbuch, Band VIII, S. 695 ff., Carl-Hanser-Verlag, München 1973).

Die Polyalkylenterephthalate gemäß Komponente A sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Propandiol-1,3-bzw. Butandiol-1,4-Resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die thermoplastischen, aromatischen Polycarbonate, Polyestercarbonate und Polyester können allein oder im beliebigen Gemisch eingesetzt werden.

### Komponente B

Erfindungsgemäß als Komponente B einsetzbare, kautschukmodifizizierte Vinyl(co)polymerisate sind Pfropfpolymerisate von
- B.1: vorzugsweise 5 bis 95 Gew.-%, besonders bevorzugt 10 bis 90 Gew.-%, bezogen auf das kautschukmodifizierte Vinyl(co)polymerisat wenigstens eines Vinylmonomeren auf
- B.2: vorzugsweise 95 bis 5 Gew.-%, besonders bevorzugt 90 bis 10 Gew.-%, bezogen auf das kautschukmodifizierte Vinyl(co)polymerisat, einer oder mehrerer kautschukelastischer Pfropfgrundlagen.

Die Pfropfgrundlagen B.2 besitzen vorzugsweise Glasübergangstemperaturen < 10°C, weiter bevorzugt von < 0°C, besonders bevorzugt < -20°C.

Die Glasübergangstemperatur wird, sofern in der vorliegenden Erfindung nicht ausdrücklich anders beschrieben, für alle Komponenten mittels dynamischer Differenzkalorimetrie (DSC) nach DIN EN 61006 bei einer Heizrate von 10 K/min mit Bestimmung der Tg als Mittelpunkttemperatur (Tangentenmethode) ermittelt.

Die Pfropfgrundlage B.2 hat im allgemeinen eine mittlere Teilchengröße (d50-Wert) von 0,05 bis 10,00 µm, vorzugsweise 0,10 bis 5,00 µm, weiter bevorzugt 0,15 bis 1,00 µm, und besonders bevorzugt von 0,2 bis 0,7 µm.

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1 sind vorzugsweise Gemische aus
- B.1.1: 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat), und
- B.1.2: 1 bis 50 Gew.-Teilen Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid .

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B.1.2 Acrylnitril oder, in einer alternativen Ausführungsform, B.1.1 = B.1.2 Methylmethacrylat.

Für die Pfropfpolymerisate gemäß Komponente B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren, Ethylen/Vinylacetatsowie Acrylat-Silikon-Komposit-Kautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt.

Besonders bevorzugt ist reiner Polybutadienkautschuk. In einer weiteren bevorzugten Ausführungsform handelt es sich bei B.2 um Styrol-Butadien-Blockcopolymer-Kautschuk.

Der Gelanteil der Pfropfgrundlage B.2 beträgt mindestens 30 Gew.-%, vorzugsweise mindestens 40 Gew.-%, besonders bevorzugt mindestens 70 Gew.-% (in Toluol gemessen).

Der Gelgehalt der Pfropfgrundlage B.2 als auch der Komponente B wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Besonders bevorzugte kautschukmodifizierte Vinyl(co)polymerisate gemäß Komponente B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Die Pfropfcopolymerisate gemäß Komponente B werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation, hergestellt.

Erfindungsgemäß enthält Komponente B eine Mischung eines in Emulsionspolymerisation und eines weiteren in Massepolymerisation hergestellten kautschukmodifizierten Vinyl(co)polymerisats.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden. Da bei der Pfropfreaktion die Pfropfmonomeren bekanntlich nicht unbedingt vollständig auf die Pfropfgrundlage aufgepfropft werden, werden erfindungsgemäß unter kautschukmodifizierte Pfropfpolymerisaten gemäß Komponente B auch solche Produkte verstanden, die durch (Co)Polymerisation der Pfropfmonomere B.1 in Gegenwart der Pfropfgrundlage B.2 gewonnen werden und bei der Aufarbeitung mit anfallen.

Als Pfropfgrundlage B.2 geeignete Acrylatkautschuke sind vorzugsweise Polymerisate aus Acrylsäurealkylestern, gegebenenfalls mit bis zu 40 Gew.-%, bezogen auf B.2 anderer polymerisierbarer, ethylenisch ungesättigter Monomeren. Zu den bevorzugten polymerisierbaren Acrylsäureestern gehören C1 bis C8-Alkylester, beispielsweise Methyl-, Ethyl-, Butyl-, n-Octyl- und 2-Ethylhexylester; Halogenalkylester, vorzugsweise Halogen-C1-C8-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5,00, insbesondere 0,05 bis 2,00 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung von als Pfropfgrundlage B.2 geeigneten Acrylatkautschuken dienen können, sind z.B. Acrylnitril, Styrol, α-Methylstyrol, Acrylamide, Vinyl-C1-C6-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Erfindungsgemäß als Komponente B einsetzbare kautschukfreie Vinyl(co)polymerisate sind beispielsweise und bevorzugt Homo- und/oder Copolymerisate von mindestens einem Monomeren aus der Gruppe der Vinylaromaten, Vinylcyanide (ungesättigte Nitrile), (Meth)Acrylsäure-(C1 bis C8)-Alkylester, ungesättigten Carbonsäuren sowie Derivaten (wie Anhydride und Imide) ungesättigter Carbonsäuren.

Insbesondere geeignet sind (Co)Polymerisate aus 50 bis 99 Gew.-Teilen, bevorzugt 60 bis 80 Gew.-Teilen, insbesondere 70 bis 80 Gew.-Teilen, jeweils bezogen auf das (Co)Polymerisat, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)- Alkylester (wie beispielsweise Methylmethacrylat, n-Butylacrylat, tert.-Butylacrylat) und 1 bis 50 Gew.-Teilen, bevorzugt 20 bis 40 Gew.-Teilen, insbesondere 20 bis 30 Gew.-Teilen, jeweils bezogen auf das (Co)Polymerisat, mindestens eines Monomeren ausgewählt aus der Gruppe derVinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid). Besonders bevorzugt ist das Copolymerisat aus Styrol und Acrylnitril.

Derartige Vinyl(co)polymerisate sind bekannt und lassen sich durch radikalische Polymerisation,insbesondere durch Emulsions-, Suspensions-, Lösungs- oder Massepolymerisation herstellen.

Im Rahmen der vorliegenden Erfindung sind unter der Bezeichnung "C1-CX" alle Kohlenwasserstoffe bzw. Kohlenwasserstoffreste zu verstehen, die ein Kohlenstoffgrundgerüst mit einer ganzen Zahl von 1 bis X aufweisen. Falls ebenfalls genannt, können diese Kohlenwasserstoffe auch andere Substituenten, vorzugsweise Halogene, weiter bevorzugt Chlor, aufweisen.

In erfindungsgemäß besonders bevorzugter Ausführungsform weisen die die Vinyl(co)polymerisate eine gewichtsgemittelte Molmasse M_{w} (bestimmt per Gelchromatographie in Aceton mit Polystyrol-Eichung) von 50.000 bis 250.000 g/mol, besonders bevorzugt von 70.000 bis 180.000 g/mol auf.

Erfindungsgemäß kommt als Komponente B ein Gemisch aus
Ba) einem ersten kautschukmodifizierten Vinyl(co)polymerisat,
Bb) einem zweiten kautschukmodifizierten Vinyl(co)polymerisat und
Bc) optional mindestens einem kautschukfreien Vinyl(co)polymerisat zum Einsatz,
wobei es sich in besonders bevorzugter Ausführungsform bei dem ersten kautschukmodifizierten Vinyl(co)polymerisat Ba) um mindestens ein Pfropfpolymer hergestellt in Emulsionspolymerisation und bei dem zweiten kautschukmodifizierten Vinyl(co)polymerisat Bb) um mindestens ein Pfropfpolymer hergestellt in Massepolymerisation handelt.

In dieser besonders bevorzugten Ausführungsform besteht Komponente B vorzugsweise aus
Ba) 10bis 90 Gew.-Teilen, bevorzugt 15 bis 50 Gew.-Teilen, insbesondere 20 bis 40 Gew.-Teilen., bezogen auf die Komponente B, mindestens eines kautschukmodifizierten Pfropfpolymerisats hergestellt durch Emulsionspolymerisation,
Bb) 10 bis 90 Gew.-Teilen, bevorzugt 15 bis 50 Gew.-Teilen, insbesondere 20 bis 40 Gew.-Teilen, bezogen auf die Komponente B, mindestens eines kautschukmodifizierten Pfropfpolymerisats hergestellt durch Massepolymerisation und
Bc) 0 bis 80 Gew.-Teilen, bevorzugt 0 bis 70 Gew.-Teilen, insbesondere 20 bis 60 Gew.-Teilen, bezogen auf die Komponente B, mindestens eines kautschukfreien Vinyl(co)polymerisats,
wobei sich die Gew-Teile aus Ba), Bb) und Bc) zu 100 Gew.-Teilen addieren.

Die Komponenten Ba, Bb und Bc können dabei auch in Form eines Präcompounds als Komponente B zum Einsatz kommen. Ebenso ist es möglich, dass beliebige Teilmengen von Ba, Bb und Bc in Form eines Präcompounds eingesetzt werden. Dieses schließt ein den Einsatz eines Präcompounds aus Ba oder Teilmengen daraus mit Bb oder Teilmengen daraus, eines Präcompounds aus Ba oder Teilmengen daraus mit Bc oder Teilmengen daraus, oder eines Präcompounds aus Bb oder Teilmengen daraus mit Bc oder Teilmengen daraus. Die Präcompounds können in jedem üblichen Compoundierungsaggregat wie beispielsweise in Zweiwellenextrudern oder Knetern hergestellt werden. In einer bevorzugten Ausführungsform werden die Präcompounds unter Anwesenheit von Wasser, welches als Schleppgas zur Entfernung von Restmonomeren und Restlösungsmitteln dient, hergestellt, wobei das Wasser mitsamt der Restmonomeren und Restlösungsmittel in einer Stufe des Präcompoundierungsverfahrens wieder durch Anlegen eines Vakuums aus der Schmelze des Präcompounds entfernt wird, bevor der Präcompound abgekühlt und dadurch verfestigt und nachfolgend granuliert wird. In einer besonderen Ausführungsform wird die kautschukmodifizierte Emulsionspfropf-Komponente Ba in feuchtem Zustand eingesetzt, indem der gefällte Emulsionspfropf vor dem Einsatz in dem Präcompoundierungsverfahren nicht oder nur unvollständig vom Restwasser getrennt und getrocknet wird. In bevorzugter Ausführungsform kann die Komponente Ba beim Einsatz in dem Präcompoundierungsverfahren von 1 bis 50 Gew.-%, insbesondere von 5 bis 40 Gew.-% Restfeuchte enthalten.

### Komponente C

Bei der Komponente C handelt es sich um ein Polyamid-Copolymer ausgewählt aus der Gruppe der Polyetheramide, Polyesteramide und Polyetheresteramide oder eine Mischung mehrerer solcher Verbindungen.

Bei den erfindungsgemäß als Komponente C zum Einsatz kommenden Polyetheramiden handelt es sich bevorzugt um Polyetherblockamide (PEBA), welche aus thermoplastischen Hartsegmenten aus Polyamidsequenzen und elastomeren Weichsegmenten aus Polyethersequenzen bestehen, welche entweder über Ester- oder Amidgruppen miteinander verknüpft sind. Zu solchen Polyetherblockamiden gelangt man durch Verknüpfung endständig funktionalisierter, bevorzugt endständig carboxylatfunktionalisierter Oligoamide mit difunktionellen Oligoethern, bevorzugt mit Oligoethern mit Hydroxyl- oder Aminoendgruppen.

Die Verbindungen gemäß Komponente C sind literaturbekannt und z.B. in US 4871804 (Daicel), EP 730005 (General Electric), EP 613919 (Sanyo Kasai), EP 1046675(Arkema), EP 1155065 (Arkema) EP 1262527 (Arkema) sowie JP 09137053 (Asahi) offenbart. Die in diesen Anmeldungen offenbarten Beschreibungen der Polyamid-Copolymere werden als Bestandteil in diese Anmeldung übernommen. Bei den in diesen Anmeldungen beschriebenen Polyetheramiden, Polyesteramiden und Polyetheresteramiden handelt es sich um bevorzugte Ausführungsformen der Komponente C in den erfindungsgemäßen Zusammensetzungen dieser aktuellen Anmeldung..

Besonders bevorzugt werden als Komponente C Polyetheramide-Blockcopolymere verwendet.

### Komponente D

Als Brönstedt-Säure gemäß Komponente D kommt mindestens eine Bröstedt-saure Verbindung ausgewählt aus der Gruppe bestehend aus organische Fruchtsäuren, anorganische saure Phosphorverbindungen und Verbindungen der Formel IV (s.u.) zum Einsatz.

Bei den erfindungsgemäß als Komponente D zum Einsatz kommenden Fruchtsäuren handelt es sich um organische Hydroxycarbonsäuren oder Dicarbonsäuren. Zu den bevorzugten Fruchtsäuren gehören Äpfelsäure, Citronensäure, Fumarsäure, Gluconsäure, Glycolsäure, Mandelsäure, Milchsäure, Oxalsäure, Salicylsäure, α-Hydroxycaprylsäure und Weinsäure.

Besonders bevorzugte Fruchtsäure ist die Citronensäure.

Die anorganischen sauren Phosphorverbindungen sind bevorzugt ausgewählt aus der Gruppe bestehend aus Phosphorsäure und deren saure Salze (das heißt Dihydrogenphosphate oder Monohydrogenphosphate, wobei als Kation in den Salzen in bevorzugter Ausführungsform Alkali- oder Erdalkaliionen zum Einsatz kommen), Oligo-/Polyphosphorsäure und deren saure Salze, phosphorige Säure und deren saure Salze (das heißt Dihydrogenphosphite oder Monohydrogenphosphite, wobei als Kation in den Salzen in bevorzugter Ausführungsform Alkali- oder Erdalkaliionen zum Einsatz kommen) sowie Oligo-/Polyphosphorige Säure und deren saure Salze. In besonders bevorzugter Ausführungsform handelt es sich bei den Salzen der Phosphor-, Oligo-/Polyphosphor-, phosphorigen und Oligo-/Polyphosphorigen Säure um ein Natium-, Kalium-, Magnesium- oder Calciumsalz.

Besonders bevorzugt werden als anorganische saure Phosphorverbindung Phosphorsäure, phosphorige Säure und Monokaliumdihydrogenphosphat eingesetzt.

In einer alternativen bevorzugten Ausführungsform der vorliegenden Erfindung kommen als Komponente D Verbindungen gemäß Formel (IV) zum Einsatz, 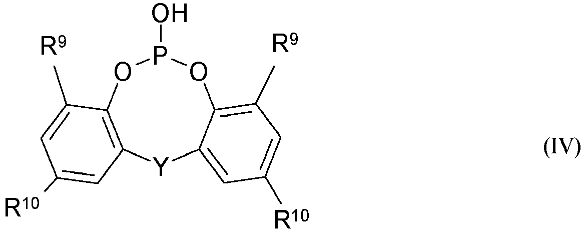 worin
R⁹ und R¹⁰ unabhängig voneinander C₁ bis C₉-Alkyl, gegebenenfalls substituiertes C₅ bis C₆-Cycloalkyl, C₆ bis C₁₀-Aryl oder C₇ bis C₁₂-Aralkyl, und
Y S oder CZ¹Z², wobei Z¹ und Z² unabhängig voneinander für H, C₁ bis C₆-Alkyl, Cyclohexenyl oder Cyclohexyl stehen,
bedeuten.

Verbindungen gemäß Formel (IV) sind bekannt und beispielsweise in EP-A 0 023 291 offenbart.

Besonders bevorzugt sind als Komponente C Phosphorigsäureester des Bis-(2-hydroxy-3-cyclohexyl-5-methyl-phenyl)-sulfids (Formel IVa),

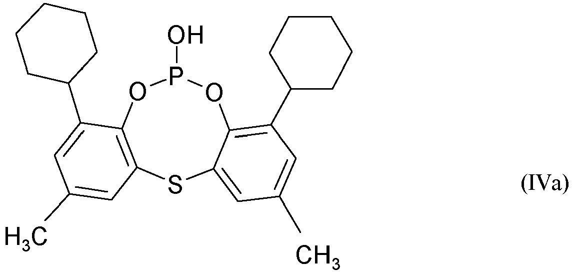

Phosphorigsäureester des Bis-(2-hydroxy-3-cyclohexyl-5-methyl-phenyl)-methans (Formel IVb),

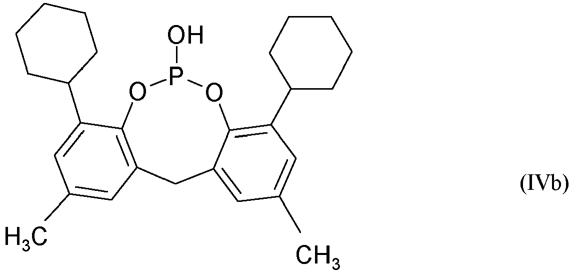

Phosphorigsäureester des Bis-(2-hydroxy-3-benzyl-5-methyl-phenyl)-sulfids (Formel (IVc), 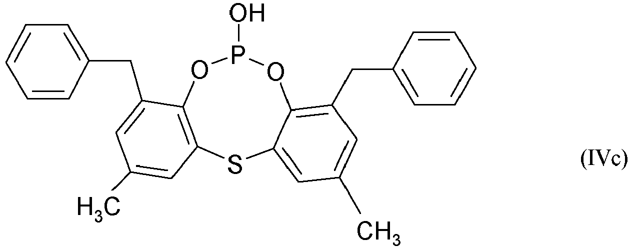 und Phosphorigsäureester des Bis-(2-hydroxy-3-benzyl-5-methyl-phenyl)-methans (Formel IVd).

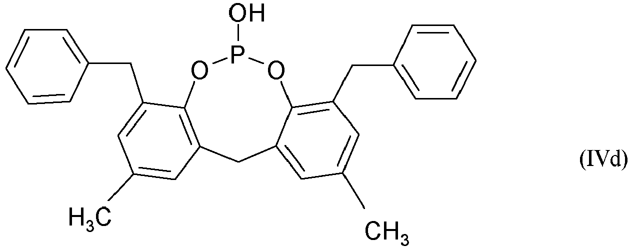

Höchst bevorzugt ist der Phosphorigsäureester des Bis-(2-hydroxy-3-cyclohexyl-5-methylphenyl)-methans gemäß Formel IVb.

### Komponente E

Die Zusammensetzung kann als Komponente E weitere Zusätze enthalten. Als weitere Zusätze gemäß Komponente E kommen insbesondere übliche Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, z.B. Polytetrafluorethylen, der Silikone sowie Aramidfasern), Gleit- und Entformungsmittel, vorzugsweise Pentaerythrittetrastearat, Nukleiermittel, Stabilisatoren (beispielsweise UV- , Thermo- und/oder Hydrolysestabilisatoren sowie Antioxidantien), Füll- und Verstärkungsstoffe, (beispielsweise Glas- oder Karbonfasern, Glimmer, Kaolin, CaCO₃ Talk und Glasschuppen) sowie Farbstoffe und Pigmente (beispielsweise Ruß, Titandioxid oder Eisenoxid) in Frage.

Als Stabilisatoren werden insbesondere Phosphor-basierte und/oder phenolische Stabilisatoren, vorzugsweise Tris(2,4-di-tert-butyl-phenyl)-phosphit beziehungsweise 2,6-Di-tert-butyl-4-(octadecanoxycarbonylethyl)phenol sowie deren Mischungen eingesetzt.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist auch ein Verfahren zur Herstellung der erfindungsgemäßen Zusammensetzungen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Insbesondere eignen sich die erfindungsgemäßen Formmassen zur Herstellung von dauerhaft antistatischen Formteilen mit geringer Neigung zur Staubanziehung mit gleichzeitig guter Wärmeformbeständigkeit, Reißdehnung, Tieftemperaturzähigkeit, Verarbeitungsstabilität sowie Hydrolyse- und Chemikalienbeständigkeit.

Die vorliegende Erfindung betrifft auch die Verwendung der vorgestellten und beanspruchten Zusammensetzungen zur Herstellung von Formkörpern, sowie eben diese Formkörper, die eine dieser Zusammensetzungen enthalten.

### Beispiele

### Komponente A:

Lineares Polycarbonat auf Basis Bisphenol-A mit einer relativen Lösungsviskosität von ήᵣₑₗ = 1,306 gemessen in Dichlormethan als Lösungsmittel bei 25 °C und in einer Konzentration von 0,5g/100ml.

### Komponente B:

Acrylnitril-Butadien-Styrol (ABS)-Präcompound hergestellt aus 33 Gew.-% eines im Emulsionspolymerisationsverfahren hergestellten ABS-Pfropfpolymerisats, 25 Gew.-% eines im Massepolymersiationsverfahren hergestellten ABS-Pfropfpolymerisats und 43 Gew.-% eines Styrol-Acrylnitril-Copolymers, wobei der ABS-Präcompound ein A:B:S-Verhältnis von 18 : 20 : 62 Gew.-% und einen Gelgehalt von 35 Gew.-% aufweist und das freie, das heißt in Aceton lösliche Styrol-Acrylnitril-Copolymer im ABS-Präcompound ein gewichtsgemitteltes Molekulargewicht Mw (gemessen per GPC in Aceton als Lösungsmittel mit Polystyrol als Standard) von 130 kg/mol besitzt.

### Komponente C:

Pebax MV1074 SP01 (Arkema, Frankreich): Polyetheramid-Blockcopolymer mit einem Stickstoffgehalt von 3,4 Gew.-% und einer Säurezahl von 0,2 mg KOH/g. Die Polyetherphase weist eine Glasübergangstemperatur von -55°C, die Polyamidphase einen Schmelzpunkt von 155°C auf. Der spezifische elektrische Oberflächenwiderstand des Polyetheramid-Blockcopolymers beträgt 3 x 10̂^9 Ohm.
**Komponente D-1:**Phosphorigsäureester des Bis-(2-hydroxy-3-cyclohexyl-5-methyl-phenyl)-methans 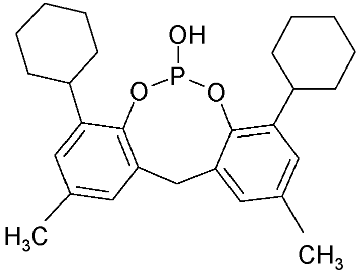
**Komponente D-2:** wasserfreie Zitronensäure
**Komponente D-3:** Phosphorsäure H₃PO₄
**Komponente D-4:** Kaliumphosphat K₃PO₄
**Komponente D-5:** Monokaliumdihydrogenphosphat KH₂PO₄
**Komponente D-6:** Stearinsäure
**Komponente E-1:** Pentaerythrittetrastearat
**Komponente E-2:** Irganox^{®} 1076 (2,6-Di-tert-butyl-4-(octadecanoxycarbonylethyl)phenol (BASF AG; Ludwigshafen)

### Herstellung und Prüfung der erfindungsgemäßen Formmassen

Das Mischen der Komponenten erfolgt auf einem Zweiwellenextruder ZSK-25 der Fa. Werner & Pfleiderer bei einer Massetemperatur von 260°C und unter Anlegen eines Unterdrucks von 50 mbar (absolut). Die Formkörper werden bei 260°C Massetemperatur und einer Werkzeugtemperatur von 80°C auf einer Spritzgießmaschine Typ Arburg 270 E hergestellt.

Die Schmelzflussrate (MVR) wird bestimmt nach ISO 1133 bei 260°C mit einer Stempellast von 5 kg.

Als Maß für die thermische Verarbeitungsstabilität der Zusammensetzung dient die Änderung des MVRs (ΔMVR) gemessen nach ISO 1133 bei 260°C mit einer Stempellast von 5 kg während einer 15-minütigen thermischen Belastung bei 300°C.

Als Maß für die Hydrolysestabilität der Zusammensetzung dient die Änderung des MVRs (ΔMVR) gemessen nach ISO 1133 bei 260°C mit einer Stempellast von 5 kg nach einer Lagerung des Granulats bei 95°C und 100% Luftfeuchtigkeit für 7 Tage.

Die Kerbschlagzähigkeit nach IZOD wird bestimmt bei -20°C gemäß ISO 180-1A an Prüfkörpern der Abmessung 80 mm x 10 mm x 4mm
Der Vicat B/120 als Maß für die Wärmeformbeständigkeit wird bestimmt gemäß ISO 306 an Prüfkörpern der Abmessung 80 mm x 10 mm x 4mm mit einer Stempellast von 50 N und einer Aufheizgeschwindigkeit von 120°C/h.

Als Maß für die Tieftemperaturduktilität im praxisrelevanten Schlag-/Crashversuch dient das Verhalten im multiaxialen Durchstoßversuch. Der Durchstoßversuch wird bei -30°C in Anlehnung an ISO 6603-2 an Prüfkörpern der Abmessung 60 mm x 60 mm x 2 mm durchgeführt. Dabei werden die Bruchbilder von insgesamt zehn Prüfkörpern dahingehend beurteilt, ob ein zähes oder sprödes Bruchbild auftritt.

Das Spannungsrissverhalten (ESC-Verhalten) wird an Stäben der Abmessung 80 mm x 10 mm x 4 mm untersucht.. Die Probekörper werden mittels einer Kreisbogenschablone vorgedehnt (Vordehnung εₓ = 2,4 %) und bei Raumtemperatur im Testmedium Rapsöl gelagert. Das Spannungsrissverhalten wird über die Zeit bis zum Bruch beurteilt.

Der spezifische Oberflächenwiderstand wird nach IEC 60093 an Rundplatten mit 60 mm Durchmesser und einer Dicke von 2 mm bestimmt. Die erfindungsgemäßen Formmassen weisen eine spezifischen Oberflächenwiderstand von 10⁸ bis 10¹⁵ Ohm, vorzugsweise von 10¹² bis 10¹⁵ Ohm, besonders bevorzugt von 10¹³ bis 10¹⁵ Ohm, auf.

Die Staubanziehungsneigung wird beurteilt an Rundplatten mit 60 mm Durchmesser und einer Dicke von 2 mm, indem die Platten für 10 s einer Aktivkohlen-haltigen Atmosphäre exponiert werden. Die Platten wurden zuvor gerieben und danach (vor der Exposition gegenüber der Aktivkohlen-haltigen Atmosphäre) für 24 h an Luft mit einer relativen Luftfeuchte von 50% bei 25°C konditioniert.

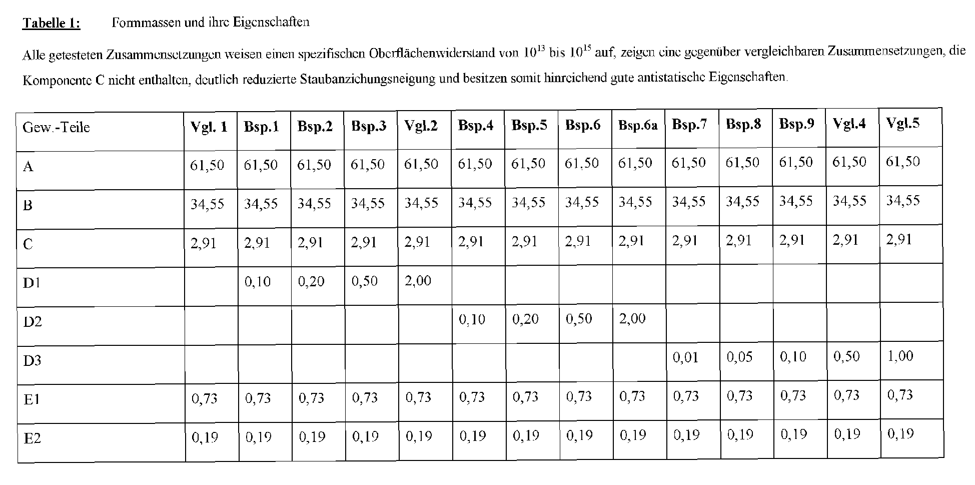

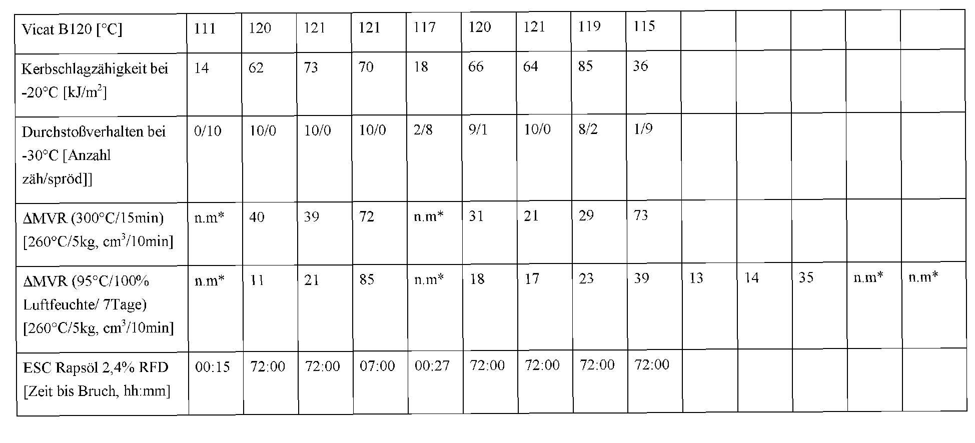

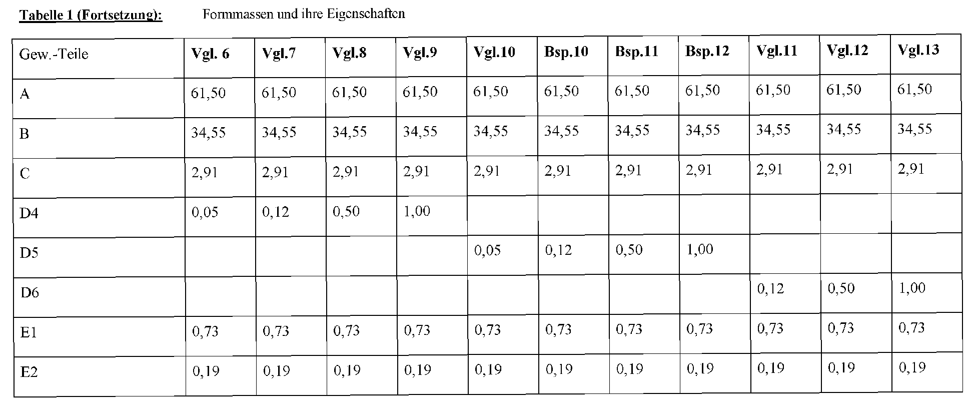

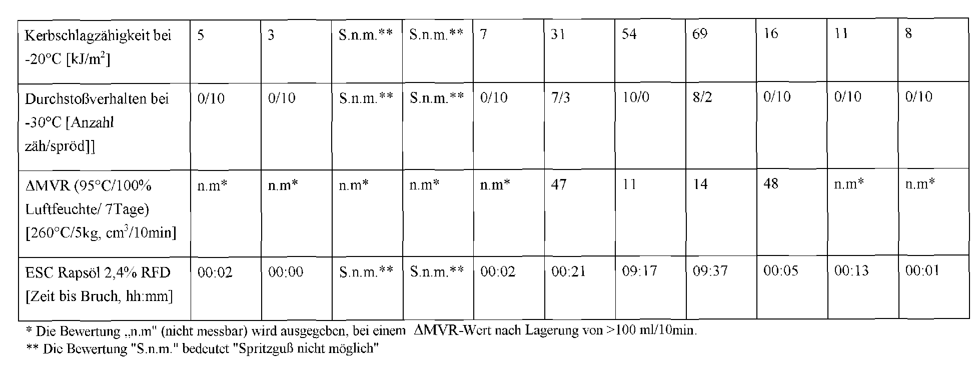

Wie aus der Tabelle 1 ersichtlich, zeigen die erfindungsgemäßen Beispiele die gewünschten Eigenschaftsvorteile. Ohne Zugabe der Komponente D weist die Zusammensetzung eine geringe Wärmeformbeständigkeit, Tieftemperaturzähigkeit, Thermostabilität, ein schlechtes Spannungsrißverhalten sowie insbesondere eine mangelhafte Hydrolysebeständigkeit auf. Durch Zugabe der Komponenten D1, D2, D3 oder D5 in einem bestimmten Konzentrationsbereich werden diese Eigenschaften verbessert (Bsp. 1 bis 12). Wird jedoch die Komponente D1, D2, D3 oder D5 nicht in dem erfindungsgemäßen Anteil zugegeben, werden die gewünschten Eigenschaften auch nicht erreicht (Vgl.2, Vgl. 4, Vgl. 5., Vgl. 10) Wird die Komponente D nicht aus der Gruppe der erfindungsgemäßen Stoffe ausgewählt, so tritt ebenfalls keine Eigenschaftsverbesserung ein oder es werden sogar schlechtere Eigenschaften beobachtet (Vgl. 6-9 sowie Vgl. 11-13).

## Patentansprüche

1. Polymerzusammensetzung enthaltend
A) 40 bis 80 Gew.-Teile, bezogen auf die Summe der Komponenten A und B mindestens eine Verbindung ausgewählt aus der Gruppe bestehend aus Polycarbonat, Polyester und Polyestercarbonat,
B) 20 bis 60 Gew.-Teile, bezogen auf die Summe der Komponenten A und B eines Gemisches aus
Ba) einem ersten kautschukmodifizierten Vinyl(co)polymerisat,
Bb) einem zweiten kautschukmodifizierten Vinyl(co)polymerisat und
Bc) optional mindestens einem kautschukfreien Vinyl(co)polymerisat,
wobei es sich bei dem ersten kautschukmodifizierten Vinyl(co)polymerisat Ba) um mindestens ein Pfropfpolymer hergestellt in Emulsionspolymerisation und bei dem zweiten kautschukmodifizierten Vinyl(co)polymerisat Bb) um mindestens ein Pfropfpolymer hergestellt in Massepolymerisation handelt.
C) mindestens eine Verbindung ausgewählt aus der Gruppe bestehend aus Polyetheramiden, Polyesteramiden und Polyetheresteramiden,
D) mindestens eine Bröstedt-saure Verbindung ausgewählt aus der Gruppe bestehend aus organischen Fruchtsäuren, anorganischen sauren Phosphorverbindungen und Verbindungen der Formel IV, 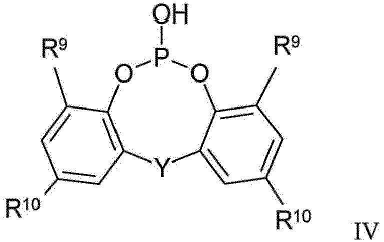 worin
R⁹ und R¹⁰ unabhängig voneinander C₁ bis C₉-Alkyl, gegebenenfalls substituiertes C₅ bis C₆-Cycloalkyl, C₆ bis C₁₀-Aryl oder C₇ bis C₁₂-Aralkyl bedeuten, und
Y S oder CZ¹Z², wobei Z¹ und Z² unabhängig voneinander für H, C₁ bis C₆-Alkyl, Cyclohexenyl oder Cyclohexyl stehen, und
E) optional weitere Additive.

2. Zusammensetzung nach Anspruch 1, **dadurch gekennzeichnet, daß** die anorganischen sauren Phosphorverbindungen ausgewählt sind aus der Gruppe bestehend aus Phosphorsäure und deren saure Salze, Oligo-/Polyphosphorsäure und deren saure Salze, phosphorige Säure und deren saure Salze sowie Oligo-/Polyphosphorige Säure und deren saure Salze.

3. Zusammensetzungen nach Anspruch 1 oder 2, **dadurch gekennzeichnet, dass**
A) enthalten ist in einem Anteil von 40 bis 80 Gew. Teilen, bezogen auf die Summe der Komponenten A und B,
B) enthalten ist in einem Anteil von 20 bis 60 Gew.-Teilen, bezogen auf die Summe der Komponenten A und B,
C) enthalten ist in einem Anteil von 0,5 bis 20 Gew.-%, bezogen auf die Gesamtzusammensetzung,
D) enthalten ist in einem Anteil von 0,001 bis 3 Gew.-%, bezogen auf die Gesamtzusammensetzung und
E) enthalten ist in einem Anteil von 0 bis 30 Gew.-%, bezogen auf die Gesamtzusammensetzung,
wobei sich die Summe der Gew.-% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

4. Zusammensetzungen nach Anspruch 1 oder 2, **dadurch gekennzeichnet, dass**
A) enthalten ist in einem Anteil von 50 bis 70 Gew. Teilen, bezogen auf die Summe der Komponenten A und B,
B) enthalten ist in einem Anteil von 30 bis 50 Gew.-Teilen, bezogen auf die Summe der Komponenten A und B,
C) enthalten ist in einem Anteil von 2 bis 5 Gew.-%, bezogen auf die Gesamtzusammensetzung,
D) enthalten ist in einem Anteil von 0,05 bis 0,5 Gew.-%, bezogen auf die Gesamtzusammensetzung und
E) enthalten ist in einem Anteil von 0,3 bis 5 Gew.-%, bezogen auf die Gesamtzusammensetzung,
wobei sich die Summe der Gew.-% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

5. Zusammensetzungen nach Anspruch 1, **dadurch gekennzeichnet, daß**
A) enthalten ist in einem Anteil von 40 bis 80 Gew. Teilen, bezogen auf die Summe der Komponenten A und B,
B) enthalten ist in einem Anteil von 20bis 60 Gew.-Teilen, bezogen auf die Summe der Komponenten A und B,
C) enthalten ist in einem Anteil von 0,5 bis 20 Gew.-%, bezogen auf die Gesamtzusammensetzung,
D) enthalten ist in einem Anteil von 0,01 bis 3 Gew.-%, bezogen auf die Gesamtzusammensetzung und D eine Fruchtsäure ist, und
E) enthalten ist in einem Anteil von 0 bis 30 Gew.-%, bezogen auf die Gesamtzusammensetzung,
wobei sich die Summe der Gew.-% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

6. Zusammensetzungen nach Anspruch 1, **dadurch gekennzeichnet, daß**
A) enthalten ist in einem Anteil von 40 bis 80 Gew. Teilen, bezogen auf die Summe der Komponenten A und B,
B) enthalten ist in einem Anteil von 20 bis 60 Gew.-Teilen, bezogen auf die Summe der Komponenten A und B,
C) enthalten ist in einem Anteil von 0,5 bis 20 Gew.-%, bezogen auf die Gesamtzusammensetzung,
D) enthalten ist in einem Anteil von 0,1 bis 3 Gew.-%, bezogen auf die Gesamtzusammensetzung und D ein saures Salz einer Säure ausgewählt aus der Gruppe bestehend aus Phosphorsäure, Oligo-/Polyphosphorsäure, phosphorige Säure und Oligo-/Polyphosphorige Säure ist,
E) enthalten ist in einem Anteil von 0 bis 30 Gew.-%, bezogen auf die Gesamtzusammensetzung, und
wobei sich die Summe der Gew.% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

7. Zusammensetzungen nach Anspruch 1, **dadurch gekennzeichnet, daß**
A) enthalten ist in einem Anteil von 40 bis 80 Gew. Teilen, bezogen auf die Summe der Komponenten A und B,
B) enthalten ist in einem Anteil von 20 bis 60 Gew.-Teilen, bezogen auf die Summe der Komponenten A und B,
C) enthalten ist in einem Anteil von 0,5 bis 20 Gew.-%, bezogen auf die Gesamtzusammensetzung,
D) enthalten ist in einem Anteil von 0,001 bis 0,3 Gew.-%, bezogen auf die Gesamtzusammensetzung und D eine Säure ausgewählt der Gruppe bestehend aus Phosphorsäure, Oligo-/Polyphosphorsäure, phosphorige Säure und Oligo-/Polyphosphorige Säure ist, und
E) enthalten ist in einem Anteil von 0 bis 30 Gew.-%, bezogen auf die Gesamtzusammensetzung,
wobei sich die Summe der Gew.-% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

8. Zusammensetzungen nach Anspruch 1, **dadurch gekennzeichnet, daß**
A) enthalten ist in einem Anteil von 40 bis 80 Gew. Teilen, bezogen auf die Summe der Komponenten A und B,
B) enthalten ist in einem Anteil von 20 bis 60 Gew.-Teilen, bezogen auf die Summe der Komponenten A und B,
C) enthalten ist in einem Anteil von 0,5 bis 20 Gew.-%, bezogen auf die Gesamtzusammensetzung,
D) enthalten ist in einem Anteil von 0,01 bis 1 Gew.-%, bezogen auf die Gesamtzusammensetzung und D eine Verbindung der Formel IV 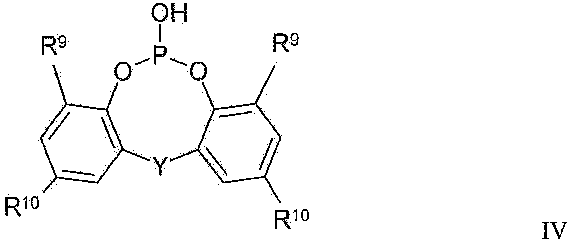 ist, worin
R⁹ und R¹⁰ unabhängig voneinander C₁ bis C₉-Alkyl, gegebenenfalls substituiertes C₅ bis C₆-Cycloalkyl, C₆ bis C₁₀-Aryl oder C₇ bis C₁₂-Aralkyl bedeuten, und
Y S oder CZ¹Z², wobei Z¹ und Z² unabhängig voneinander für H, C₁ bis C₆-Alkyl, Cyclohexenyl oder Cyclohexyl stehen,
und
E) enthalten ist in einem Anteil von 0 bis 30 Gew.-%, bezogen auf die Gesamtzusammensetzung,
wobei sich die Summe der Gew.-% der Komponenten A und B in der Gesamtzusammensetzung berechnet als Differenz von 100 Gew.-% minus der Summe der Gew.-% der Komponenten C, D und E, und
wobei unter Gesamtzusammensetzung die Summe der Gew.-% aller Komponenten A+B+C+D+E = 100 Gew.-% zu verstehen ist.

9. Zusammensetzung nach einem der Ansprüche 1-4 oder 6, **dadurch gekennzeichnet, dass** Komponente D Monokaliumdihydrogenphosphat ist.

10. Zusammensetzung nach einem der Ansprüche 1-4 oder 7, **dadurch gekennzeichnet, dass** Komponente D Phosphorsäure ist.

11. Zusammensetzung nach einem der Ansprüche 1 oder 3-5, **dadurch gekennzeichnet, dass** Komponente D Zitronensäure ist.

12. Zusammensetzung nach einem der Ansprüche 1, 3, 4 oder 8, **dadurch gekennzeichnet, dass** Komponente D der Phosphorigsäureester des Bis-(2-hydroxy-3-cyclohexyl-5-methyl-phenyl)-methans ist.

13. Zusammensetzung nach einem der vorhergehenden Ansprüche, **dadurch gekennzeichnet, dass** der spezifische elektrische Oberflächenwiderstand der Zusammensetzung und daraus hergestellter Bauteile gemessen gemäß IEC 60093 im Bereich von 10⁸ bis 10¹⁵ Ohm liegt.

14. Zusammensetzung nach einem der vorhergehenden Ansprüche, **dadurch gekennzeichnet, dass** diese eine verbesserte Hydrolysebeständigkeit **gekennzeichnet durch** eine Änderung des MVRs (ΔMVR) gemessen nach ISO 1133 bei 260°C mit einer Stempellast von 5 kg nach einer Lagerung des Granulats bei 95°C und 100% Luftfeuchtigkeit für 7 Tage von kleiner als 50 ml/10min, bevorzugt von kleiner 25 ml/10min aufweist.

15. Zusammensetzung nach einem der vorhergehenden Ansprüche, enthaltend als Komponente E mindestens eine Komponente ausgewählt aus der Gruppe bestehend aus Flammschutzmittel, Antidrippingmittel, Gleit- und Entformungsmittel, Nukleiermittel, Stabilisatoren, Füll- und Verstärkungsstoffe sowie Farbstoffe und Pigmente.

## Claims

1. Polymer composition containing
A) from 40 to 80 parts by weight, based on the entirety of components A and B, of at least one compound selected from the group consisting of polycarbonate, polyester and polyester carbonate,
B) from 20 to 60 parts by weight, based on the entirety of components A and B, of a mixture of
Ba) a first rubber-modified vinyl (co)polymer,
Bb) a second rubber-modified vinyl (co)polymer and
Bc) optionally at least one rubber-free vinyl (co)polymer, where the first rubber-modified vinyl (co)polymer Ba) is at least one graft polymer produced by emulsion polymerization and the second rubber-modified vinyl (co)polymer Bb) is at least one graft polymer produced by bulk polymerization,
C) at least one compound selected from the group consisting of polyether amides, polyester amides and polyether ester amides,
D) at least one Brönstedt-acidic compound selected from the group consisting of organic fruit acids, inorganic acidic phosphorus compounds and compounds of formula IV 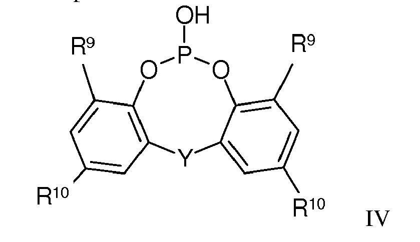 wherein
R⁹ and R¹⁰ independently of one another denote C₁- to C₉-alkyl, optionally substituted C₅- to C₆-cycloalkyl, C₆- to C₁₀-aryl or C₇- to C₁₂-aralkyl, and
Y denotes S or CZ¹Z², wherein Z¹ and Z² independently of one another represent H, C₁- to C₆-alkyl, cyclohexenyl or cyclohexyl, and
E) optionally further additives.

2. Composition according to claim 1, **characterised in that** the inorganic acidic phosphorus compounds are selected from the group consisting of phosphoric acid and acidic salts thereof, oligo-/poly-phosphoric acid and acidic salts thereof, phosphorous acid and acidic salts thereof, and oligo-/poly-phosphorous acid and acidic salts thereof.

3. Compositions according to claim 1 or 2, **characterised in that**
A) is present in an amount of from 40 to 80 parts by weight, based on the sum of components A and B,
B) is present in an amount of from 20 to 60 parts by weight, based on the sum of components A and B,
C) is present in an amount of from 0.5 to 20 wt.%, based on the total composition,
D) is present in an amount of from 0.001 to 3 wt.%, based on the total composition, and
E) is present in an amount of from 0 to 30 wt.%, based on the total composition,
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

4. Compositions according to claim 1 or 2, **characterised in that**
A) is present in an amount of from 50 to 70 parts by weight, based on the sum of components A and B,
B) is present in an amount of from 30 to 50 parts by weight, based on the sum of components A and B,
C) is present in an amount of from 2 to 5 wt.%, based on the total composition,
D) is present in an amount of from 0.05 to 0.5 wt.%, based on the total composition, and
E) is present in an amount of from 0.3 to 5 wt.%, based on the total composition,
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

5. Compositions according to claim 1, **characterised in that**
A) is present in an amount of from 40 to 80 parts by weight, based on the sum of components A and B,
B) is present in an amount of from 20 to 60 parts by weight, based on the sum of components A and B,
C) is present in an amount of from 0.5 to 20 wt.%, based on the total composition,
D) is present in an amount of from 0.01 to 3 wt.%, based on the total composition, and D is a fruit acid, and
E) is present in an amount of from 0 to 30 wt.%, based on the total composition,
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

6. Compositions according to claim 1, **characterised in that**
A) is present in an amount of from 40 to 80 parts by weight, based on the sum of components A and B,
B) is present in an amount of from 20 to 60 parts by weight, based on the sum of components A and B,
C) is present in an amount of from 0.5 to 20 wt.%, based on the total composition,
D) is present in an amount of from 0.1 to 3 wt.%, based on the total composition, and D is an acidic salt of an acid selected from the group consisting of phosphoric acid, oligo-/poly-phosphoric acid, phosphorous acid and oligo-/poly-phosphorous acid,
E) is present in an amount of from 0 to 30 wt.%, based on the total composition, and
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

7. Compositions according to claim 1, **characterised in that**
A) is present in an amount of from 40 to 80 parts by weight, based on the sum of components A and B,
B) is present in an amount of from 20 to 60 parts by weight, based on the sum of components A and B,
C) is present in an amount of from 0.5 to 20 wt.%, based on the total composition,
D) is present in an amount of from 0.001 to 0.3 wt.%, based on the total composition, and D is an acid selected from the group consisting of phosphoric acid, oligo-/poly-phosphoric acid, phosphorous acid and oligo-/poly-phosphorous acid, and
E) is present in an amount of from 0 to 30 wt.%, based on the total composition,
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

8. Compositions according to claim 1, **characterised in that**
A) is present in an amount of from 40 to 80 parts by weight, based on the sum of components A and B,
B) is present in an amount of from 20 to 60 parts by weight, based on the sum of components A and B,
C) is present in an amount of from 0.5 to 20 wt.%, based on the total composition,
D) is present in an amount of from 0.01 to 1 wt.%, based on the total composition, and D is a compound of formula IV 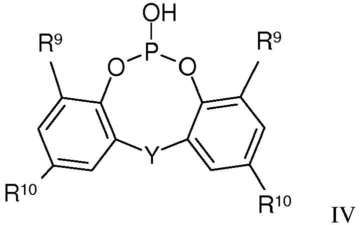 wherein
R⁹ and R¹⁰ independently of one another denote C₁- to C₉-alkyl, optionally substituted C₅- to C₆-cycloalkyl, C₆- to C₁₀-aryl or C₇- to C₁₂-aralkyl, and
Y denotes S or CZ¹Z², wherein Z¹ and Z² independently of one another represent H, C₁- to C₆-alkyl, cyclohexenyl or cyclohexyl, and
E) is present in an amount of from 0 to 30 wt.%, based on the total composition,
wherein the sum of the wt.% of components A and B in the total composition is calculated as the difference of 100 wt.% minus the sum of the wt.% of components C, D and E, and
wherein total composition is to be understood as meaning the sum of the wt.% of all the components A+B+C+D+E = 100 wt.%.

9. Composition according to any one of claims 1-4 or 6, **characterised in that** component D is monopotassium dihydrogen phosphate.

10. Composition according to any one of claims 1-4 or 7, **characterised in that** component D is phosphoric acid.

11. Composition according to any one of claims 1 or 3-5, **characterised in that** component D is citric acid.

12. Composition according to any one of claims 1, 3, 4 or 8, **characterised in that** component D is the phosphorous acid ester of bis-(2-hydroxy-3-cyclohexyl-5-methyl-phenyl)-methane.

13. Composition according to any one of the preceding claims, **characterised in that** the specific electric surface resistance of the composition and components produced therefrom, measured according to IEC 60093, is in the range from 10⁸ to 10¹⁵ ohms.

14. Composition according to any one of the preceding claims, **characterised in that** it has improved hydrolytic stability **characterised by** a change in the MVR (ΔMVR), measured according to ISO 1133 at 260°C with a die load of 5 kg, after storage of the granules for 7 days at 95°C and 100% atmospheric humidity, of less than 50 ml/10 min, preferably less than 25 ml/10 min.

15. Composition according to any one of the preceding claims, containing as component E at least one component selected from the group consisting of flameproofing agents, antidripping agents, lubricants and demoulding agents, nucleating agents, stabilisers, fillers and reinforcing substances, as well as colourings and pigments.

## Revendications

1. Composition polymère contenant
A) 40 à 80 parties en poids, par rapport à la somme des composants A et B, d'au moins un composé choisi dans le groupe constitué par le polycarbonate, le polyester et le polyestercarbonate,
B) 20 à 60 parties en poids, par rapport à la somme des composants A et B, d'un mélange
Ba) d'un premier (co)polymère de vinyle modifié par du caoutchouc,
Bb) d'un deuxième (co)polymère de vinyle modifié par du caoutchouc,
Bc) éventuellement d'au moins un (co)polymère de vinyle exempt de caoutchouc,
où il s'agit, pour le premier (co)polymère de vinyle Ba) modifié par du caoutchouc, d'au moins un polymère greffé préparé dans une polymérisation en émulsion et, pour le deuxième (co)polymère de vinyle Bb) modifié par du caoutchouc, d'au moins un polymère greffé préparé dans une polymérisation en masse,
C) au moins un composé choisi dans le groupe constitué par les polyétheramides, les polyesteramides et les polyétheresteramides,
D) au moins un composé acide de Brönstedt, choisi dans le groupe constitué par les acides organiques de fruits, les composés phosphorés acides inorganiques et les composés de formule IV, 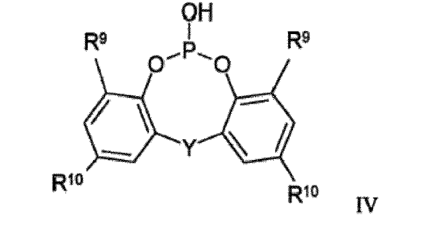 dans laquelle
R⁹ et R¹⁰ représentent, indépendamment l'un de l'autre, C₁-C₉-alkyle, C₅-C₆-cycloalkyle le cas échéant substitué, C₆-C₁₀-aryle ou C₇-C₁₂-aralkyle, et
Y représente S ou CZ¹Z², Z¹ et Z² représentant, indépendamment l'un de l'autre, H, C₁-C₆-alkyle, cyclohexényle ou cyclohexyle, et
E) éventuellement d'autres additifs.

2. Composition selon la revendication 1, **caractérisée en ce que** les composés phosphorés acides organiques sont choisis dans le groupe constitué par l'acide phosphorique et ses sels acides, l'acide oligophosphorique/polyphosphorique et ses sels acides, l'acide phosphoreux et ses sels acides ainsi que l'acide oligophosphoreux/polyphosphoreux et ses sels acides.

3. Compositions selon la revendication 1 ou 2, **caractérisées en ce que**
A) est contenu en une proportion de 40 à 80 parties en poids, par rapport à la somme des composants A et B,
B) est contenu en une proportion de 20 à 60 parties en poids, par rapport à la somme des composants A et B,
C) est contenu en une proportion de 0,5 à 20% en poids, par rapport à la composition totale,
D) est contenu en une proportion de 0,001 à 3% en poids, par rapport à la composition totale,
E) est contenu en une proportion de 0 à 30% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

4. Compositions selon la revendication 1 ou 2, **caractérisées en ce que**
A) est contenu en une proportion de 50 à 70 parties en poids, par rapport à la somme des composants A et B,
B) est contenu en une proportion de 30 à 50 parties en poids, par rapport à la somme des composants A et B,
C) est contenu en une proportion de 2 à 5% en poids, par rapport à la composition totale,
D) est contenu en une proportion de 0,05 à 0,5% en poids, par rapport à la composition totale et
E) est contenu en une proportion de 0,3 à 5% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

5. Compositions selon la revendication 1, **caractérisées en ce que**
A) est contenu en une proportion de 40 à 80 parties en poids, par rapport à la somme des composants A et B,
B) est contenu en une proportion de 20 à 60 parties en poids, par rapport à la somme des composants A et B,
C) est contenu en une proportion de 0,5 à 20% en poids, par rapport à la composition totale,
D) est contenu en une proportion de 0,01 à 3% en poids, par rapport à la composition totale et D étant un acide de fruits et
E) est contenu en une proportion de 0 à 30% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

6. Compositions selon la revendication 1, **caractérisées en ce que**
A) est contenu en une proportion de 40 à 80 parties en poids, par rapport à la somme des composants A et B,
B) est contenu en une proportion de 20 à 60 parties en poids, par rapport à la somme des composants A et B,
C) est contenu en une proportion de 0,5 à 20% en poids, par rapport à la composition totale,
D) est contenu en une proportion de 0,1 à 3% en poids, par rapport à la composition totale, et D est un sel acide d'un acide choisi dans le groupe constitué par l'acide phosphorique, l'acide oligophosphorique/polyphosphorique, l'acide phosphoreux et l'acide oligophosphoreux/polyphosphoreux,
E) est contenu en une proportion de 0 à 30% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

7. Compositions selon la revendication 1, **caractérisées en ce que**
A) est contenu en une proportion de 40 à 80 parties en poids, par rapport à la somme des composants A et B,
B) est contenu en une proportion de 20 à 60 parties en poids, par rapport à la somme des composants A et B,
C) est contenu en une proportion de 0,5 à 20% en poids, par rapport à la composition totale,
D) est contenu en une proportion de 0,001 à 0,3% en poids, par rapport à la composition totale, et D est un acide choisi dans le groupe constitué par l'acide phosphorique, l'acide oligophosphorique/polyphosphorique, l'acide phosphoreux et l'acide oligophosphoreux/polyphosphoreux, et
E) est contenu en une proportion de 0 à 30% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

8. Compositions selon la revendication 1, **caractérisées en ce que**
A) est contenu en une proportion de 40 à 80 parties en poids, par rapport à la somme des composants A et B,
B) est contenu en une proportion de 20 à 60 parties en poids, par rapport à la somme des composants A et B,
C) est contenu en une proportion de 0,5 à 20% en poids, par rapport à la composition totale,
D) est contenu en une proportion de 0,01 à 1% en poids, par rapport à la composition totale, et D est un composé de formule IV 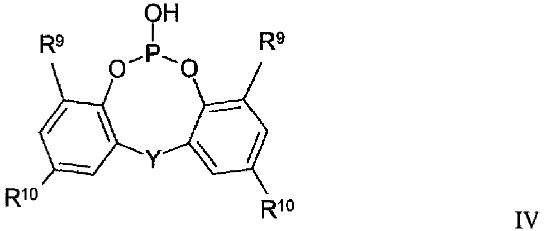 dans laquelle
R⁹ et R¹⁰ représentent, indépendamment l'un de l'autre, C₁-C₉-alkyle, C₅-C₆-cycloalkyle le cas échéant substitué, C₆-C₁₀-aryle ou C₇-C₁₂-aralkyle, et
Y représente S ou CZ¹Z², Z¹ et Z²- représentant, indépendamment l'un de l'autre, H, C₁-C₆-alkyle, cyclohexényle ou cyclohexyle, et
E) est contenu en une proportion de 0 à 30% en poids, par rapport à la composition totale,
la somme des % en poids des composants A et B dans la composition totale étant calculée comme différence de 100% en poids moins la somme de % en poids des composés C, D et E et la composition totale représentant la somme des % en poids de tous les composants A + B + C + D + E = 100% en poids.

9. Composition selon l'une quelconque des revendications 1-4 ou 6, **caractérisée en ce que** le composant D est le dihydrogénophosphate monopotassique.

10. Composition selon l'une quelconque des revendications 1-4 ou 7, **caractérisée en ce que** le composant D est l'acide phosphorique.

11. Composition selon l'une quelconque des revendications 1 ou 3-5, **caractérisée en ce que** le composant D est l'acide citrique.

12. Composition selon l'une quelconque des revendications 1, 3, 4 ou 8, **caractérisée en ce que** le composant D est l'ester d'acide phosphoreux du bis-(2-hydroxy-3-cyclohexyl-5-méthylphényl)-méthane.

13. Composition selon l'une quelconque des revendications précédentes, **caractérisée en ce que** la résistance surfacique électrique spécifique de la composition et des pièces fabriquées à partir de celle-ci, mesurée selon la norme IEC 60093, est située dans la plage de 10⁸ à 10¹⁵ Ohm.

14. Composition selon l'une quelconque des revendications précédentes, **caractérisée en ce qu'**elle présente une résistance améliorée à l'hydrolyse, **caractérisée par** une modification de l'indice de fluidité à chaud - MVR (ΔMVR), mesuré selon la norme ISO 1133 à 260°C sous une charge de la matrice de 5 kg, après un entreposage du granulat à 95°C et à une humidité de l'air de 100% pendant 7 jours, inférieure à 50 ml/10 min, de préférence inférieure à 25 ml/10 min.

15. Composition selon l'une quelconque des revendications précédentes, contenant, comme composant E, au moins un composant choisi dans le groupe constitué par les agents ignifuges, les agents antigoutte, les agents lubrifiants et de démoulage, les agents de nucléation, les stabilisants, les charges et les substances de renforcement, les colorants et les pigments.
